(19) Europäisches Patentamt
European Patent Office
Office européen des brevets

(11) **EP 4 576 498 A1**

(12) **EUROPEAN PATENT APPLICATION**
published in accordance with Art. 153(4) EPC

(43) Date of publication:
**25.06.2025  Bulletin 2025/26**

(21) Application number: **23872290.4**

(22) Date of filing: **26.09.2023**

(51) International Patent Classification (IPC):
**H02K 1/18** (2006.01)      **H02K 5/24** (2006.01)

(52) Cooperative Patent Classification (CPC):
**H02K 1/18; H02K 5/24**

(86) International application number:
**PCT/JP2023/034816**

(87) International publication number:
**WO 2024/071067 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **28.09.2022   JP 2022154431**

(71) Applicant: **DAIKIN INDUSTRIES, LTD.
Osaka-shi, Osaka 530-0001 (JP)**

(72) Inventor: **NAKA, Shojiro
Osaka-shi, Osaka 530-0001 (JP)**

(74) Representative: **Goddar, Heinz J.
Boehmert & Boehmert
Anwaltspartnerschaft mbB
Pettenkoferstrasse 22
80336 München (DE)**

(54) **MAGNETIC CIRCUIT COMPONENT, AIR BLOWER, COMPRESSOR, AND REFRIGERATING DEVICE**

(57)     A magnetic circuit component (31) includes a core (32) made of a soft magnetic material and including an annular yoke (34); and a dynamic damper (50) provided on the core (32) and configured to reduce vibration of the core (32). The dynamic damper (50) includes a weight (51) and a connection (52) that connects the weight (51) with the yoke (34) and that is elastically deformable. The dynamic damper (50) is integrated with the core (32).

FIG.3

EP 4 576 498 A1

**Description**

TECHNICAL FIELD

The present disclosure relates to a magnetic circuit component, a blower, a compressor, and a refrigeration apparatus.

BACKGROUND ART

A traditional magnetic circuit that consists of closed circuits containing a magnetic flux is known. Such a magnetic circuit generates vibration due to a change in the magnetic force. In the field of magnetic circuits, there is a need to reduce this vibration.

Patent Document 1 discloses an electric motor, a kind of magnetic circuit. The electric motor of Patent Document 1 includes a stator core and an outer peripheral plate disposed around the outer periphery of the stator core. This electric motor also includes a plurality of reinforcing plates provided between the outer peripheral plate and the stator core. This reinforcing plate includes a first beam member and a second beam member each having elasticity. The first beam member and the second beam member are coupled by a coupling member. This structure reduces the support rigidity of the stator core and absorbs electromagnetic vibration of the stator core.

CITATION LIST

PATENT DOCUMENT

Patent Document 1: Japanese Unexamined Patent Publication No. 2009-254012

SUMMARY OF THE INVENTION

TECHNICAL PROBLEM

For the electric motor of Patent Document 1, providing the plurality of reinforcing plates contributes to a reduction in vibration, but providing those extra reinforcing plates also leads to an increase in cost. In addition, the manufacturing process requires another process for attaching the reinforcing plates to the electric motor, which leads to a further increase in cost.

An object of the present disclosure is to provide a magnetic circuit component that forms part of a magnetic circuit, where it is possible to reduce vibration of a core while reducing an increase in the product cost.

SOLUTION TO THE PROBLEM

A first aspect is directed to a magnetic circuit component forming part of a magnetic circuit, including: a core (32) made of a soft magnetic material and including an annular yoke (34); and a dynamic damper (50) provided on the core (32) and configured to reduce vibration of the core (32), wherein the dynamic damper (50) includes a weight (51) and a connection (52) that connects the weight (51) with the yoke (34) and that is elastically deformable, and the dynamic damper (50) is integrated with the core (32).

In the first aspect, the dynamic damper (50) to reduce vibration of the core (32) is provided, and the dynamic damper (50) is integrated with the core (32). Thus, it is possible to reduce the vibration of the core (32) without providing extra members. In addition, in this aspect, unlike the configuration in which the dynamic dampers (50) are separate from the core (32), it is unnecessary to conduct an operation for attaching the dynamic dampers (50) to the core (32). Accordingly, it is possible to reduce the vibration of the core (32) while reducing an increase in the product cost of the magnetic circuit component (31).

A second aspect is an embodiment of the first aspect. In the second aspect, the weight (51) extends along a circumferential direction of the yoke (34).

In the second aspect, the weight (51) extends along the circumferential direction of the annular yoke (34), and thus it is possible to reduce the whole size of the core (32) while ensuring the magnetic path of the yoke (34).

A third aspect is an embodiment of the first or second aspect. In the third aspect, the dynamic damper (50) is provided on an outer periphery or an inside of the yoke (34).

In the third aspect, the dynamic damper (50) provided on the outer periphery or the inside of the yoke (34) reduces the vibration of the core (32).

A fourth aspect is an embodiment of any one of the first to third aspects. In the fourth aspect, the core (32) includes a plurality of electromagnetic steel sheets (M) stacked on each other, and the plurality of electromagnetic steel sheets (M) are fastened to each other at the weight (51).

In the fourth aspect, the plurality of electromagnetic steel sheets (M) forming the core (32) are fastened to each other at the weight (51), and thus the fastening portion is formed on part that the magnetic flux does not pass through. Thus, it is possible to reduce an increase in iron loss caused by fastening.

A fifth aspect is an embodiment of any one of the first to fourth aspects. In the fifth aspect, the magnetic circuit includes a rotor (40) configured to be rotatable on an axial center of a shaft (20), and a stator (31) disposed to face the rotor (40) in a radial direction of the shaft (20), the stator (31) has a stator core (32) as the core (32) and a coil (33) wound around the stator core (32), and the dynamic damper (50) is arranged opposite to the rotor (40) in the radial direction.

In the fifth aspect, the dynamic damper (50) arranged opposite to the rotor (40) in the radial direction of the shaft (20) reduces the vibration of the core (32).

A sixth aspect is an embodiment of any one of the first to fifth aspects. **In** the sixth aspect, the magnetic circuit component forms part of an electric motor (30).

In the sixth aspect, it is possible to reduce the vibration of the core (32) while reducing an increase in the product cost of the electric motor (30).

A seventh aspect is an embodiment of any one of the first to fifth aspects. In the seventh aspect, the magnetic circuit component forms part of a magnetic bearing.

In the seventh aspect, it is possible to reduce the vibration of the core (32) while reducing an increase in the product cost of the magnetic bearing.

An eighth aspect is an embodiment of any one of the first to fourth aspects. In the eighth aspect, the magnetic circuit component forms part of a reactor.

In the eighth aspect, it is possible to reduce the vibration of the core (32) while reducing an increase in the product cost of the reactor.

A ninth aspect is directed to a blower including: an electric motor (30) including the magnetic circuit component of the sixth aspect; and a fan configured to be driven by the electric motor (30).

In the eighth aspect, the blower where it is possible to reduce the vibration while reducing an increase in the product cost is provided.

A tenth aspect is directed to a compressor including: a magnetic circuit component of the sixth or seventh aspect.

In the tenth aspect, the compressor where it is possible to reduce the vibration while reducing an increase in the product cost is provided.

An eleventh aspect is directed to a refrigeration apparatus including: the compressor (10) of the tenth aspect; and a refrigerant circuit (R) through which a refrigerant compressed by the compressor (10) flows.

In the eleventh aspect, the refrigeration apparatus where it is possible to reduce the vibration while reducing an increase in the product cost is provided.

BRIEF DESCRIPTION OF THE DRAWINGS

FIG. 1 is a schematic piping system diagram of a refrigeration apparatus according to the first embodiment.

FIG. 2 is a cross-sectional view of a compressor in the axial direction according to the first embodiment.

FIG. 3 is a cross-sectional view in the direction perpendicular to the axial direction that schematically shows a cross-sectional shape of an electric motor according to the first embodiment.

FIG. 4 is an enlarged view of a frame IV in FIG. 3.

FIG. 5 is a cross section in arrow view taken along the line V-V in FIG. 4.

FIG. 6 is a graph showing the results of simulation.

FIG. 7 is an enlarged view of a main part according to the first variation of the first embodiment.

FIG. 8 is an enlarged view of a main part according to the second variation of the first embodiment.

FIG. 9 is an enlarged view of a main part according to the third variation of the first embodiment.

FIG. 10 is an enlarged view of a main part according to the fourth variation of the first embodiment.

FIG. 11 is an enlarged view of a main part according to the fifth variation of the first embodiment.

FIG. 12 corresponds to FIG. 5 and shows the sixth variation of the first embodiment.

FIG. 13 corresponds to FIG. 5 and shows the seventh variation of the first embodiment.

FIG. 14 is an enlarged view of a main part according to the eighth variation of the first embodiment.

FIG. 15 corresponds to FIG. 3 and shows the second embodiment.

DESCRIPTION OF EMBODIMENTS

Embodiments of the present disclosure will be described in detail below with reference to the drawings. The present disclosure is not limited to the embodiments shown below, and various changes can be made within the scope without departing from the technical concept of the present disclosure. Since each of the drawings is intended to illustrate the present disclosure conceptually, lengths, ratios, or numbers may be exaggerated or simplified as necessary for the sake of ease of understanding.

<<First Embodiment>>

A first embodiment will be described. A magnetic circuit component (31) of the present disclosure forms part of an electric motor (30). The electric motor (30) of this embodiment is provided in a compressor (10) of a refrigeration apparatus (1).

(1) Overview of Refrigeration Apparatus

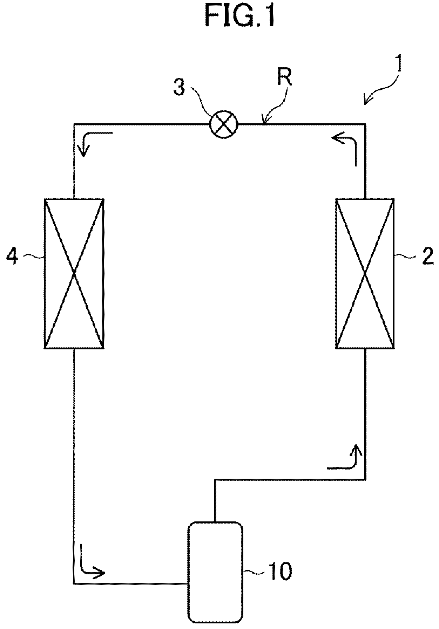

As illustrated in FIG. 1, the refrigeration apparatus (1) includes the compressor (10). The refrigeration apparatus (1) includes a refrigerant circuit (R) filled with a refrigerant. The refrigerant circuit (R) includes the compressor (10), a radiator (2), a decompression mechanism (3), and an evaporator (4). The decompression mechanism (3) is an expansion valve. The refrigerant circuit (R) performs a vapor compression refrigeration cycle.
In the refrigeration cycle, the refrigerant compressed by the compressor (10) dissipates heat to air in the radiator (2). The refrigerant having dissipated heat is decompressed by the decompression mechanism (3) and is evaporated in the evaporator (4). The evaporated refrigerant is sucked into the compressor (10).
The refrigeration apparatus (1) is an air conditioner. The air conditioner may be a cooling-only apparatus, a heating-only apparatus, or an air conditioner switchable between cooling and heating. In this case, the air conditioner includes a switching mechanism (for example, a four-way switching valve) configured to switch the direction of circulation of the refrigerant. The refrigeration apparatus (1) may be a water heater, a chiller unit, or a cooling apparatus that cools air in an internal space. The cooling apparatus cools air in a refrigerator, a freezer, a container, or the like. The decompression mechanism (3) may be an electronic expansion valve, a thermal expansion valve, an expander, or a capillary tube.

(2) Compressor

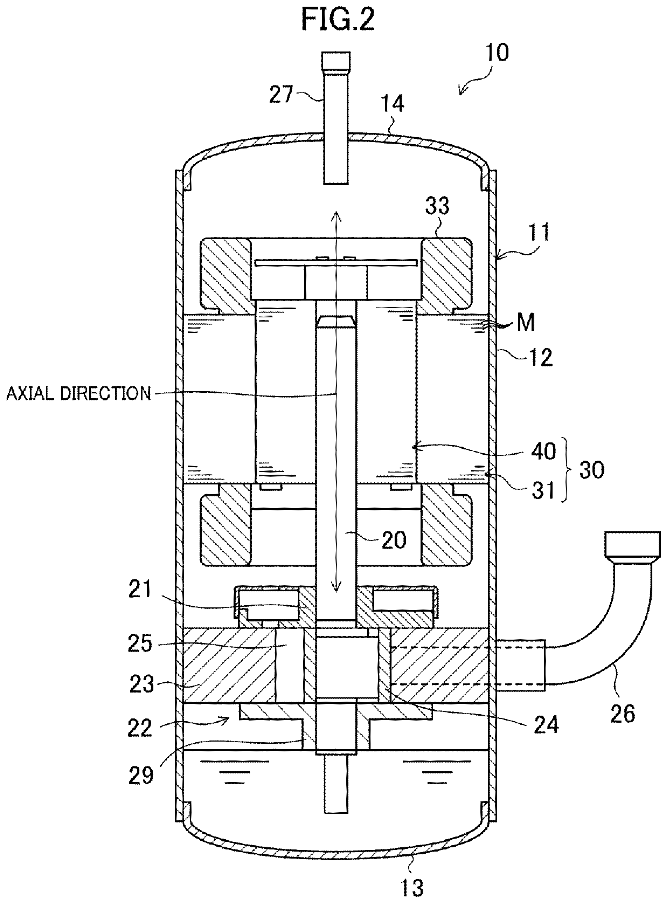

As illustrated in FIG. 2, the compressor (10) includes a casing (11), an electric motor (30), a drive shaft (20), and a compression mechanism (22). The compressor (10) is a rotary compressor. Precisely, the compressor (10) is a compressor of an oscillating piston type. The compressor (10) may be a scroll compressor, a screw compressor, or a turbo compressor.

(2-1) Casing

The casing (11) houses the electric motor (30), the drive shaft (20), and the compression mechanism (22). The casing (11) is a hermetic container. The inside of the casing (11) is filled with high-pressure refrigerant discharged from the compression mechanism (22).
The casing (11) is made of a metal material. The casing (11) includes a barrel (12), a bottom (13), and a top (14). The barrel (12) is a cylindrical member made of metal. An opening is formed at both ends of the barrel (12) in the axial direction. In this embodiment, the axial direction of the barrel (12) corresponds to the vertical direction. The bottom (13) closes the lower opening of the barrel (12). The top (14) closes the upper opening of the barrel (12).

(2-2) Electric Motor

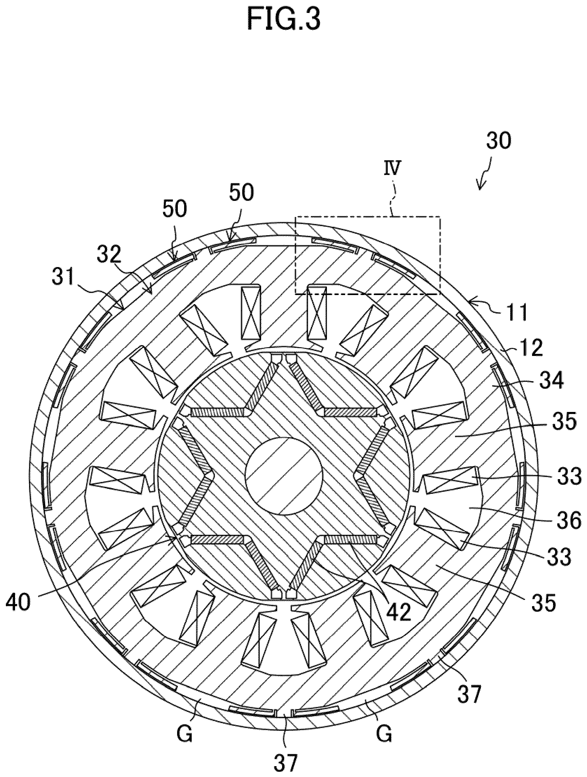

The electric motor (30) in FIGS. 2 and 3 is an example of a magnetic circuit. The electric motor (30) is disposed above the compression mechanism (22). The operation frequency of the electric motor (30) is controlled by an inverter device. In other words, the compressor (10) is an inverter compressor of which the operation frequency is variable.

As illustrated in FIG. 2, the electric motor (30) includes a stator (31) and a rotor (40). The stator (31) is supported by the barrel (12) of the casing (11). The stator (31) corresponds to a magnetic circuit component of the present disclosure.

As illustrated in FIG. 3, the stator (31) includes a stator core (32) and a coil (33) wound around the stator core (32), and dynamic dampers (50). The stator core (32) corresponds to a core of the present disclosure. The electric motor (30) is an electromagnetic device that energizes the coil (33) to allow the rotor (40) to generate a rotational torque.

The stator core (32) consists of electromagnetic steel sheets (M) as soft magnetic materials stacked on each other in the axial direction. The stator core (32) is formed in a tubular shape. As illustrated in FIG. 3, the stator core (32) includes an annular yoke (34) and a plurality of teeth (35) (nine teeth in this embodiment) extending radially inward from the inner periphery of the yoke (34).

The dynamic dampers (50) are provided on the stator core (32). The dynamic dampers (50) are components for reducing vibration of the stator core (32). The details of the stator (31) will be described later.

The rotor (40) is disposed inside the stator core (32). The drive shaft (20) is fixed to the axial center of the rotor (40). In other words, the stator core (32) is disposed to face the rotor (40) in the radial direction of the drive shaft (20). A plurality of permanent magnets (42) are embedded in the rotor (40). An annular gap (so-called air gap) is formed between the teeth (35) of the stator (31) and the rotor (40) when viewed in the axial direction.

(2-3) Drive Shaft

The drive shaft (20) extends in the vertical direction along the axis of the casing (11). The drive shaft (20) is rotated by the electric motor (30). The drive shaft (20) is rotatably supported by bearings (21, 29). The drive shaft (20) corresponds to a shaft of the present disclosure.

(2-4) Compression Mechanism

The compression mechanism (22) includes a cylinder (23) and a piston (24) provided inside the cylinder (23). A cylinder chamber (25) is formed between the inner peripheral surface of the cylinder (23) and the outer peripheral surface of the piston (24). In the cylinder chamber (25), fluid is compressed by the piston (24) driven by the drive shaft (20).

(2-5) Suction Pipe and Discharge Pipe

The compressor (10) includes a suction pipe (26) and a discharge pipe (27). The suction pipe (26) penetrates the barrel (12) in the radial direction and communicates with the cylinder chamber (25). A low-pressure refrigerant in the refrigerant circuit (R) is sucked into the cylinder chamber (25) through the suction pipe (26). The discharge pipe (27) penetrates the top (14) in the axial direction and communicates with the internal space of the casing (11). The refrigerant compressed in the compression mechanism (22) flows through the air gap of the electric motor (30), and then is sent to the refrigerant circuit (R) through the discharge pipe (27).

(3) Details of Stator

The details of the stator (31) will be described with reference to FIGS. 3 to 5. In the following description, the terms "axial direction," "circumferential direction," and "radial direction" refer to the axial direction, circumferential direction, and radial direction of the yoke (34) of the stator (31), respectively, unless otherwise specified. In this embodiment, the axial direction of the yoke (34) corresponds to the axial direction of the drive shaft (20) as illustrated in FIG. 2.

As described above, the stator (31) includes the stator core (32), the coil (33), and the dynamic dampers (50). The stator core (32) includes the annular yoke (34) and the plurality of teeth (35).

The teeth (35) extend radially inward from the inner periphery of the yoke (34). The coil (33) is wound around each of the teeth (35) by, for example, the concentrated winding method. A coil slot (36), a space for accommodating the coil (33), is formed between the teeth (35) adjacent to each other.

In this embodiment, the plurality of electromagnetic steel sheets (M) forming the stator core (32) are fastened to each other in the yoke (34). In this embodiment, the electromagnetic steel sheets (M) are fastened to each other by clinching. The electromagnetic steel sheets (M) may be fastened by welding, adhering, or the like, instead of clinching.

(3-1) Support

As illustrated in FIG. 3, the stator core (32) includes a plurality of supports (37) (nine supports in this embodiment). The supports (37) allow the stator core (32) to be supported on the barrel (12) of the casing (11). The supports (37) are arranged at predetermined intervals in the circumferential direction. The supports (37) protrude radially outward from the outer periphery of the yoke (34). The supports (37) are fitted so as to be in contact with the inner peripheral surface of the barrel (12) and fixed. Accordingly, the stator core (32) is held by the casing (11).

(3-2) Dynamic Damper

The stator (31) includes the plurality of dynamic dampers (50) (eighteen dampers in this embodiment). The dynamic dampers (50) are provided on the outer periphery of the yoke (34). The dynamic dampers (50) are arranged in a small gap (G) between the inner peripheral surface of the barrel (12) and the outer peripheral surface of the yoke (34). The dynamic dampers (50) are arranged opposite to the rotor (40) in the radial direction.

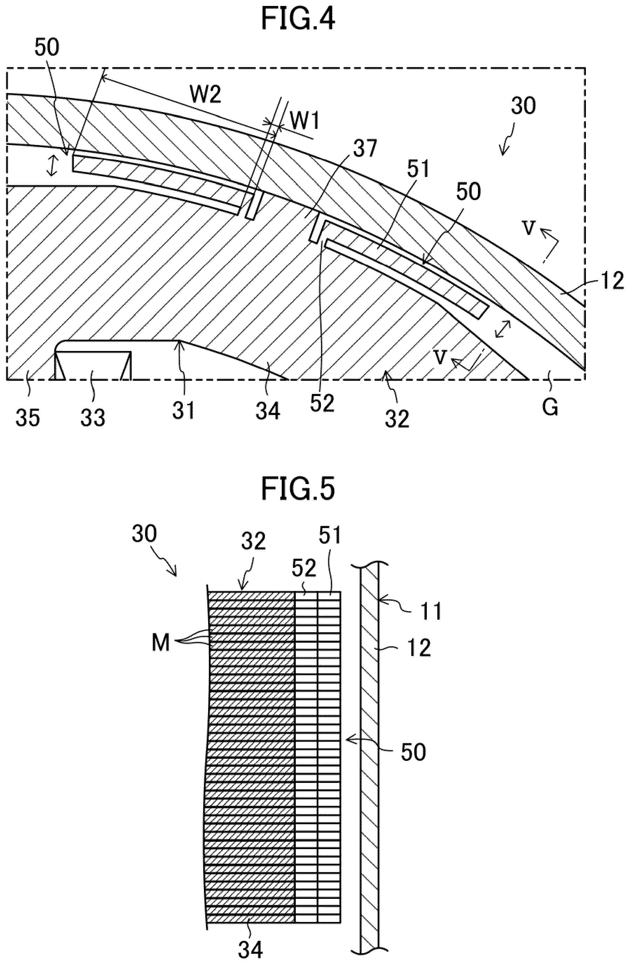

The dynamic dampers (50) adjacent to each other are arranged to sandwich one support (37) in the circumferential direction. The dynamic dampers (50) adjacent to each other may abut on each other rather than sandwich one support (37). The dynamic dampers (50) are arranged radially outside of the coil slots (36). As illustrated in FIG. 5, each dynamic damper (50) extends from one end to the other end of the stator core (32) in the axial direction.

As illustrated in FIG. 4, the dynamic damper (50) is formed in an L-shape when viewed in the axial direction. The dynamic damper (50) includes a weight (51) and a connection (52). The weight (51) extends along the circumferential direction of the yoke (34). The weight (51) is formed in a substantially rectangular parallelepiped shape. The weight (51) is formed in a substantially rectangular shape, the long side of which extends in the circumferential direction, and the short side of which extends in the radial direction, when viewed in the axial direction. The weight (51) is not in contact with the inner peripheral surface of the barrel (12). The weight (51) is also not in contact with the outer peripheral surface of the yoke (34).

The connection (52) connects the weight (51) with the yoke (34). Specifically, the connection (52) connects the outer periphery of the yoke (34) with one end of the weight (51) in the circumferential direction. The connection (52) extends in the radial direction. The connection (52) is formed in a substantially rectangular parallelepiped shape. The connection (52) is elastically deformable. As illustrated in FIG. 4, the length W1 of the connection (52) in the circumferential direction is much shorter than the length W2 of the weight (51) in the circumferential direction. Thus, the connection (52) is elastically more deformable than the weight (51).

When the yoke (34) of the stator core (32) vibrates at the characteristic frequency, the dynamic damper (50) vibrates with a phase different from a phase of the vibration of the yoke (34), thereby reducing the vibration of the stator core (32).

"Vibrating with a phase different from a phase of the vibration of the yoke (34)" includes vibrating at a frequency different from the characteristic frequency of the yoke (34). **In** this case, the phase difference between the characteristic vibration of the yoke (34) and the vibration of the dynamic damper (50) changes as time lapses.

"Vibrating with a phase different from a phase of the vibration of the yoke (34)" also includes vibrating at the same frequency as the characteristic frequency of the yoke (34) and with a phase different from a phase of the characteristic vibration of the yoke (34). **In** this case, for example, when the phase difference between the characteristic vibration of the yoke (34) and the vibration of the dynamic damper (50) is 90 to 270 degrees, the characteristic vibration of the yoke (34) and the vibration of the dynamic damper (50) cancel each other, thereby reducing the vibration of the stator core (32). For example, when the phase difference between the characteristic vibration of the yoke (34) and the vibration of the dynamic damper (50) is 0 to 90 degrees or 270 to 360 degrees, the peak of the characteristic vibration of the yoke (34) and the peak of the vibration of the dynamic damper (50) fail to match each other, thereby reducing the peak of the vibration of the stator core (32).

When the rotor (40) rotates, a magnetic attraction force is generated between the rotor (40) and the stator (31). This force is called an electromagnetic force. The electromagnetic force acts on the stator core (32), thereby vibrating the stator core (32).

When the stator core (32) vibrates, the dynamic damper (50) of this embodiment vibrates, where the connection (52) serves as a node, and the tip portion of the weight (51) (the other end in the circumferential direction) serves as an anti-node. In this way, when the stator core (32) vibrates, the weight (51) vibrates accordingly, thereby reducing the vibration of the stator core (32) in the radial direction caused by the electromagnetic force.

Here, the dynamic damper (50) of the present disclosure can be considered as a cantilever structure. The characteristic frequency f of the cantilever can be expressed by Expression 1 below.

[Expression 1]

$$f = \frac{1}{T} = \frac{1}{2\pi\sqrt{m/k}}$$

In Expression 1, m is the mass (kg) acting on the beam tip, and k is the stiffness (N/m) of the cantilever. The stiffness k of the cantilever can be expressed by Expression 2 below.

[Expression 2]

$$k = \frac{3EI}{L^3}$$

In Expression 2, E is the Young's modulus, I is the second area moment, and L is the length of the beam.

According to Expression 1, for example, if the length W1 of the connection (52) in the circumferential direction becomes longer, the cross-sectional area of the connection (52) becomes larger. Thus, the second area moment I becomes larger. As a result, the stiffness k of the connection (52) becomes larger, enabling the characteristic frequency f of the dynamic damper (50) to be larger. In contrast, for example, if the length W2 of the weight (51) in the circumferential direction becomes shorter, the mass m of the weight (51) becomes smaller. Thus, in this case, the characteristic frequency f of the dynamic damper (50) can be larger. In this way, in the dynamic damper (50) of this embodiment, the characteristic frequency f of the dynamic damper (50) can be set to a desired characteristic frequency by changing the length W1 of the connection (52) in the circumferential direction and the length W2 of the weight (51) in the circumferential direction.

The dynamic dampers (50) are integrated with the stator core (32). Specifically, the dynamic dampers (50) consist of the electromagnetic steel sheets (M) made of soft magnetic materials similarly to the stator core (32) and forming the stator core (32). The dynamic dampers (50) are formed by punching out the electromagnetic steel sheets (M) by press-processing or the like using a die having a shape in which a portion for the stator core (32) and portions for the dynamic dampers (50) are integrated together; and then stacking the obtained electromagnetic steel sheets (M). In other words, when the stator core (32) is formed, the dynamic dampers (50) can be formed at the same time.

According to the above process, the dynamic dampers (50) integrated with the stator core (32) are formed, and thus it is possible to provide the dynamic dampers (50) without providing extra members to the stator (31). In addition, it is unnecessary to conduct the process for attaching the dynamic dampers (50) separately from the process for producing the stator core (32), and thus it is possible to reduce an increase in the attachment process. Thus, it is possible to reduce the vibration of the stator core (32) while reducing an increase in the production cost of the stator (31).

Further, according to the above structure, it is unnecessary to conduct the process for attaching the dynamic dampers (50) to the stator core (32), and thus it is possible to eliminate the variation in accuracy of attaching the dynamic dampers (50). Thus, it is possible to reduce the variation in performance of the dynamic dampers (50) depending on the stator (31).

**In** addition, the dynamic dampers (50) of this embodiment are arranged in the small gap (G) between the inner peripheral surface of the casing (11) and the outer peripheral surface of the stator (31). Thus, for example, it is unnecessary to increase the size of the electric motor (30) or decrease the size of the stator core (32) in order to provide the dynamic dampers (50). Thus, according to this embodiment, it is possible to reduce the vibration of the stator core (32) while maintaining the performance of the electric motor (30).

(4) Simulation

The simulation conducted to confirm the vibration reduction effect of the dynamic dampers (50) of this embodiment will be described. The simulation employed a 6-pole 9-slot motor. From the simulation, the acceleration of the outer peripheral surface of the stator core (32) obtained when an excitation force at the characteristic frequency (resonant frequency) of the stator (31) was applied to the stator (31) was examined.

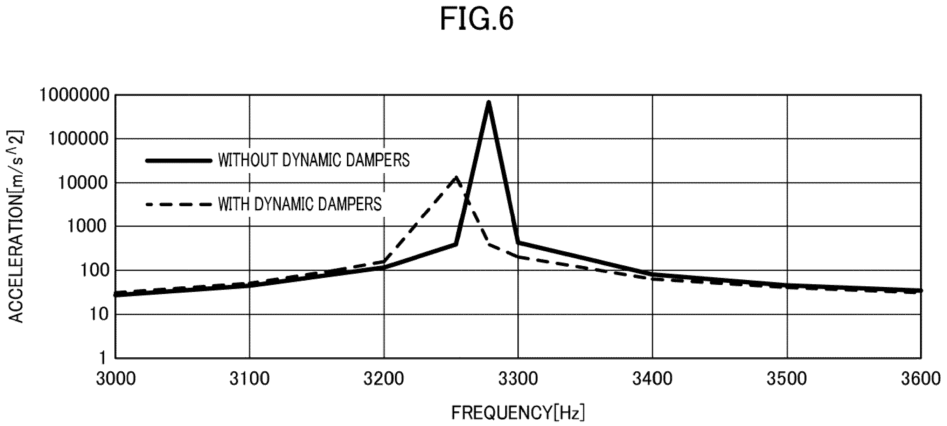

FIG. 6 is a graph obtained from the simulation and showing the relation between frequency and acceleration on the outer peripheral surface of the stator core (32). The solid line in the graph is the result of applying an excitation force to a traditional stator that does not include dynamic dampers. The broken line in the figure is the result of applying an excitation force to the stator (31) that includes the dynamic dampers (50) of this embodiment.

It was found that in the range of 3200 Hz to 3300 Hz of the graph, the peak value of the acceleration of the stator (31) of this embodiment was reduced by about 98% as compared with the traditional stator. This seems to be because the dynamic dampers (50) vibrated with an antiphase of the vibration of the stator core (32), thereby reducing the vibration of the stator core (32). From this result, it was confirmed that the dynamic dampers (50) of this embodiment can provide the stator (31) in which the vibration of the stator core (32) is reduced.

(5) Features

(5-1)
In the stator (31) of this embodiment, the dynamic dampers (50) are integrated with the stator core (32). Thus, it is possible to reduce the vibration of the stator core (32) without providing extra members. In addition, unlike the configuration in which the dynamic dampers (50) are separate from the stator core (32), it is unnecessary to conduct an operation for attaching the dynamic dampers (50) to the stator core (32). Accordingly, it is possible to reduce the vibration of the stator core (32) while reducing an increase in the product cost of the stator (31).
(5-2)
The weight (51) of this embodiment extends along the circumferential direction of the annular yoke (34). Thus, it is possible to reduce the whole size of the stator core (32) while ensuring the magnetic path of the yoke (34).
(5-3)
The dynamic dampers (50) of this embodiment are provided on the outer periphery of the yoke (34). Accordingly, the vibration of the stator core (32) is reduced at the outer periphery of the yoke (34). Further, it is easy to form the dynamic dampers (50) because the dynamic dampers (50) are provided on the outer periphery of the yoke (34).
(5-4)
The dynamic dampers (50) of this embodiment are arranged opposite to the rotor (40) in the radial direction. Accordingly, the vibration of the stator core (32) is reduced at the portion opposite to the rotor (40) in the radial direction.
(5-5)
The stator (31) of this embodiment forms part of the electric motor (30). Thus, it is possible to reduce the vibration of the stator core (32) while reducing an increase in the product cost of the electric motor (30).
(5-6)
The dynamic dampers (50) of this embodiment extend from one end to the other end of the stator core (32) in the axial direction. Accordingly, it is possible to reduce the vibration in the axial direction. Examples of the vibration in the axial direction includes vibration caused by misalignment of the central axis of the drive shaft (20), vibration caused by an electromagnetic force unbalanced when the central axis is displaced, and the like.
(5-7)
The dynamic damper (50) of this embodiment is formed in an L-shape. Accordingly, it is possible to set the length W2 of the weight (51) in the circumferential direction relatively freely, and thus it is easy to set the characteristic frequency of the dynamic damper (50) to a desired characteristic frequency.
(5-8)
The dynamic dampers (50) of this embodiment are arranged radially outside of the coil slots (36). Here, the stator core (32) is more likely to vibrate at locations radially outside of the coil slots (36) than at locations radially outside of the teeth (35). Thus, according to this embodiment, the dynamic dampers (50) are arranged radially outside of the coil slots (36), thereby further reducing the vibration of the stator core (32).

(6) Variations

The above embodiment may be modified as the following variations. **In** the following description, the differences from the embodiment will be described in principle.

(6-1) First Variation: Shape of Weight

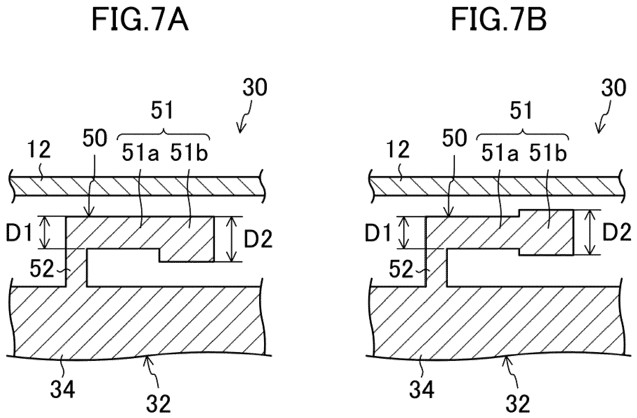

As illustrated in FIG. 7, the dynamic damper (50) of this embodiment may be configured so that the length of the weight (51) in the radial direction is not constant from one end to the other end in the circumferential direction when viewed in the axial direction. This variation also provides the same advantages as those of the embodiment.
Specifically, the weight (51) includes a first weight portion (51a) and a second weight portion (51b) each different in length in the radial direction. The first weight portion (51a) is part of the weight (51) that is close to the connection (52). The second weight portion (51b) is part of the weight (51) that is away from the connection (52). The first weight portion (51a) and the second weight portion (51b) are continuous. The connection (52) is connected to one end of the first weight portion (51a) in the circumferential direction. The length D2 of the second weight portion (51b) in the radial direction is longer than the length D1 of the first weight portion (51a) in the radial direction (D1<D2). In other words, the weight (51) is configured so that the tip portion is heavier than the middle portion.
In this variation, as illustrated in FIG. 7A, for example, the weight (51) may be configured so that the outer edge portion of the first weight portion (51a) and the outer edge portion of the second weight portion (51b) are disposed at the same position in the radial direction. In this case, the inner edge portion of the second weight portion (51b) is disposed radially inside of the inner edge portion of the first weight portion (51a).

In this variation, as illustrated in FIG. 7B, the weight (51) may be configured so that the outer edge portion of the first weight portion (51a) and the outer edge portion of the second weight portion (51b) are disposed at different positions in the radial direction. In FIG. 7B, the outer edge portion of the second weight portion (51b) is disposed radially outside of the outer edge portion of the first weight portion (51a). In this case, the inner edge portion of the second weight portion (51b) is disposed radially inside of the inner edge portion of the first weight portion (51a).

(6-2) Second Variation: Shape of Weight

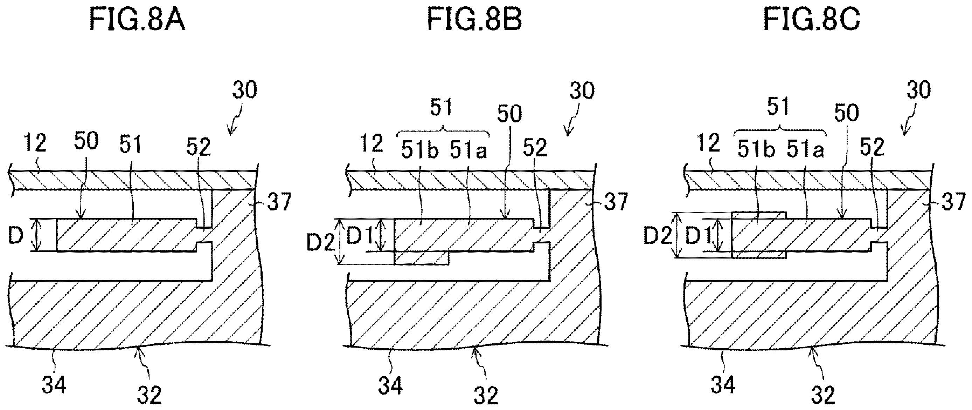

As illustrated in FIG. 8, the dynamic damper (50) of this embodiment may be formed in an I-shape when viewed in the axial direction. In this case, the connection (52) is provided on the support (37) of the stator core (32). The connection (52) connects the side edge portion of the support (37) and one end of the weight (51) in the circumferential direction. The connection (52) extends in the circumferential direction. This variation also provides the same advantages as those of the embodiment.

In this variation, as illustrated in FIG. 8A, for example, the weight (51) may be configured so that the length D in the radial direction is constant from one end to the other end in the circumferential direction when viewed in the axial direction.

In this variation, similarly to the first variation, as illustrated in FIGS. 8B and 8C, the weight (51) may include the first weight portion (51a) and the second weight portion (51b) each different in length in the radial direction. In this case, as illustrated in FIG. 8B, the weight (51) may be configured so that the outer edge portion of the first weight portion (51a) and the outer edge portion of the second weight portion (51b) are disposed at the same position in the radial direction. Further, as illustrated in FIG. 8C, the weight (51) may be configured so that the outer edge portion of the first weight portion (51a) and the outer edge portion of the second weight portion (51b) are disposed at different positions in the radial direction.

(6-3) Third Variation: Shape of Weight

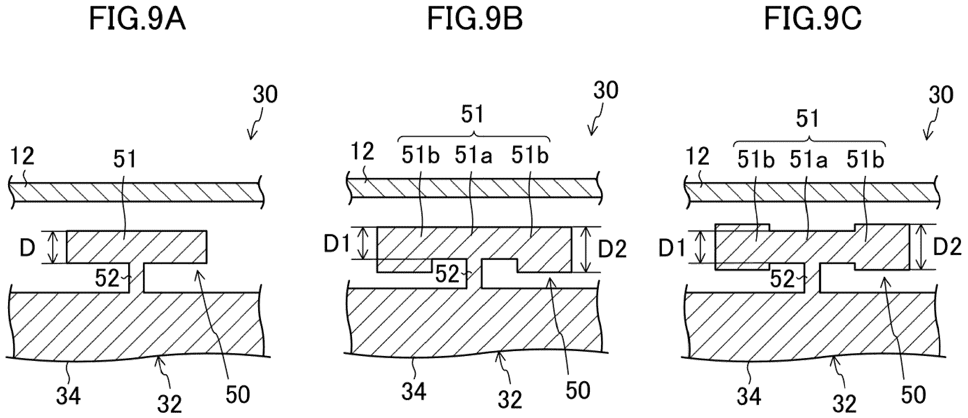

As illustrated in FIG. 9, the dynamic damper (50) of this embodiment may be formed in a T-shape when viewed in the axial direction. In this case, the connection (52) connects the outer peripheral surface of the yoke (34) with the central portion of the weight (51) in the circumferential direction. This variation also provides the same advantages as those of the embodiment.

In this variation, as illustrated in FIG. 9A, for example, the weight (51) may be configured so that the length D in the radial direction is constant from one end to the other end in the circumferential direction when viewed in the axial direction.

In this variation, similarly to the first variation, as illustrated in FIGS. 9B and 9C, the weight (51) may include the first weight portion (51a) and the second weight portion (51b) each different in length in the radial direction. In this variation, the weight (51) includes one first weight portion (51a) and two second weight portions (51b). The first weight portion (51a) is the central portion of the weight (51). The second weight portion (51b) is formed on each end of the first weight portion (51a) in the circumferential direction. The length D2 of the second weight portion (51b) in the radial direction is longer than the length D1 of the first weight portion (51a) in the radial direction (D1<D2). In other words, the weight (51) is configured so that the tip portions on both ends in the circumferential direction are heavier than the middle portion.

In this variation, as illustrated in FIG. 9B, the weight (51) may be configured so that the outer edge portion of the first weight portion (51a) and the outer edge portions of the second weight portions (51b) are disposed at the same position in the radial direction. Further, as illustrated in FIG. 9C, the weight (51) may be configured so that the outer edge portion of the first weight portion (51a) and the outer edge portions of the second weight portions (51b) are disposed at different positions in the radial direction.

(6-4) Fourth Variation: Arrangement of Dynamic Dampers

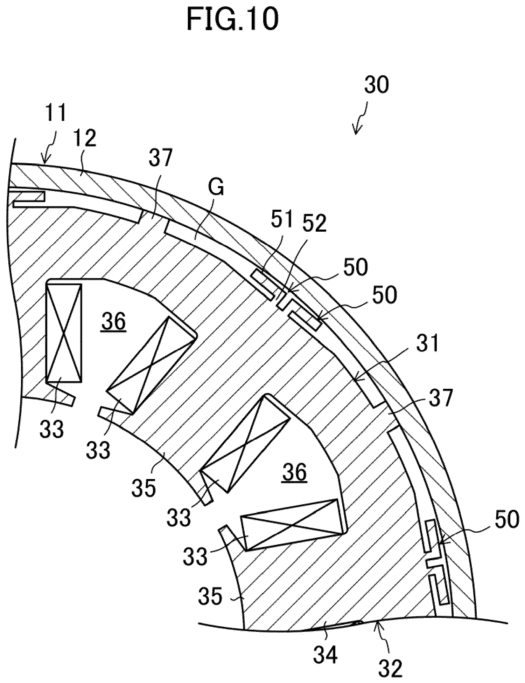

As illustrated in FIG. 10, the dynamic dampers (50) may be arranged radially outside of the teeth (35). In FIG. 10, the dynamic dampers (50) adjacent to each other abut on each other rather than sandwich one support (37), but in this variation, the dynamic dampers (50) adjacent to each other may be arranged to sandwich one support (37) in the circumferential direction. According to this variation, similarly to the embodiment, it is possible to reduce the vibration of the stator core (32) while reducing an increase in the product cost.

(6-5) Fifth Variation: Arrangement of Dynamic Dampers

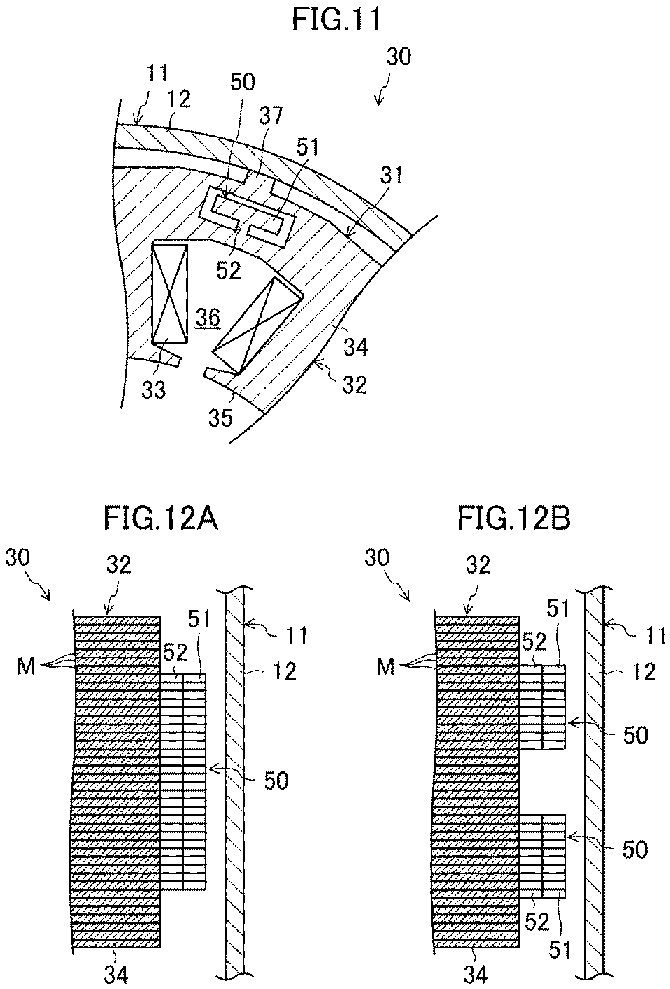

As illustrated in FIG. 11, the dynamic damper (50) may be provided inside the yoke (34). Specifically, a relatively small space is formed inside the yoke (34), and the dynamic damper (50) is accommodated in that space. According to this variation, similarly to the embodiment, it is possible to reduce the vibration of the stator core (32) while reducing an increase in the product cost. FIG. 11 illustrates as an example that the dynamic damper (50) is formed in a T-shape when viewed in the axial direction, but similarly to the embodiment and the first and second variations, the dynamic damper (50) may be formed in an L-shape or an I-shape when viewed in the axial direction.

(6-6) Sixth Variation: Arrangement of Dynamic Dampers in Axial Direction

As illustrated in FIG. 12, the dynamic damper (50) does not have to extend from one end to the other end of the stator core (32) in the axial direction. In this case, the length of the dynamic damper (50) in the axial direction is shorter than the length of the stator core (32) in the axial direction. According to this variation, similarly to the embodiment, it is possible to reduce the vibration of the stator core (32) while reducing an increase in the product cost.

In this variation, as illustrated in FIG. 12A, for example, one dynamic damper (50) may be disposed on the central portion of the stator core (32) in the axial direction. In this case, the dynamic damper (50) is not formed on the upper and lower electromagnetic steel sheets (M) among the electromagnetic steel sheets (M) forming the stator core (32).

In this variation, as illustrated in FIG. 12B, a plurality of dynamic dampers (50) (two dampers in this variation) may be arranged in the axial direction. In other words, the dynamic damper (50) is not necessarily continuous in the axial direction. In FIG. 12B, the dynamic dampers (50) are formed on the upper and lower electromagnetic steel sheets (M) among the electromagnetic steel sheets (M) forming the stator core (32).

According to this variation, the length of the weight (51) in the axial direction is changed, thereby changing the mass of the weight (51). Accordingly, it is possible to change the characteristic frequency of the dynamic damper (50) to a desired characteristic frequency.

(6-7) Seventh Variation: Shape of Dynamic Damper in Axial Direction

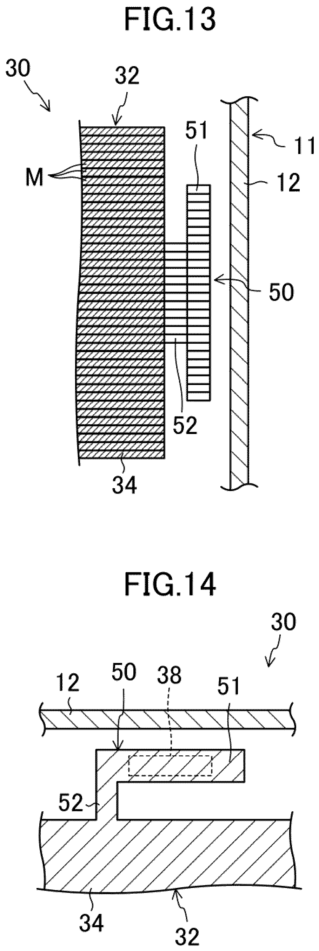

As illustrated in FIG. 13, the dynamic damper (50) may be formed in a T-shape when viewed in the radial direction. Specifically, the dynamic damper (50) of this variation is configured so that the length of the weight (51) in the axial direction is longer than the length of the connection (52) in the axial direction.

According to this variation, similarly to the embodiment, it is possible to reduce the vibration of the stator core (32) while reducing an increase in the product cost. In addition, similarly to the sixth variation, the length of the weight (51) in the axial direction is changed, thereby changing the mass of the weight (51). Accordingly, it is possible to change the characteristic frequency of the dynamic damper (50) to a desired characteristic frequency.

(6-8) Eighth Variation: Position Where Electromagnetic Steel Sheets Are Fastened

As illustrated in FIG. 14, the plurality of electromagnetic steel sheets (M) forming the stator core (32) may be fastened to each other at the weight (51) of the dynamic damper (50). In this variation, the electromagnetic steel sheets (M) are fastened to each other by clinching. For example, as shown by the broken line in FIG. 14, a fastening portion (38) formed by clinching is provided on the central portion of the weight (51).

According to this variation, the plurality of electromagnetic steel sheets (M) forming the stator core (32) are fastened to each other at the weight (51), and thus the fastening portion (38) is formed on part that the magnetic flux does not pass through. Thus, it is possible to reduce an increase in iron loss caused by fastening. Note that the plurality of electromagnetic steel sheets (M) can be fastened at the weight (51) by welding, bonding, or the like, too.

<<Second Embodiment>>

A second embodiment will be described. The electric motor (30) of the first embodiment is an inner-rotor-type electric motor in which the rotor (40) is disposed inside the stator (31). In contrast, the electric motor (30) of this embodiment is an outer-rotor-type electric motor in which the rotor (40) is disposed outside the stator (31). Here, the differences between the electric motor (30) of this embodiment and the electric motor (30) of the first embodiment will be described.

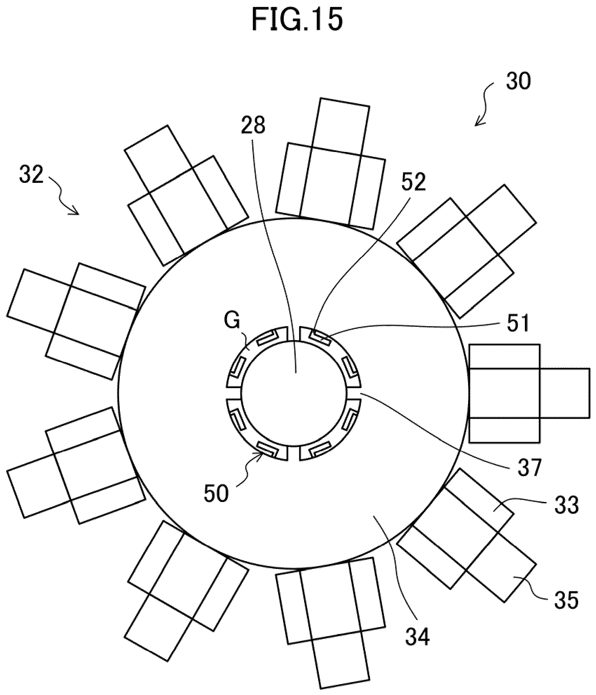

As illustrated in FIG. 15, the stator core (32) includes the annular yoke (34) and the teeth (35) extending radially outward from the yoke (34). The teeth (35) are provided with the coils (33). The stator core (32) further includes the plurality of supports (37) (four supports in this embodiment). The supports (37) allow the stator core (32) to be supported on the shaft (28). The supports (37) protrude radially inward from the inner periphery of the yoke (34). The supports (37) are in contact with and are fixed to the outer peripheral surface of the shaft (28).

The stator (31) includes the plurality of dynamic dampers (50) (eight dampers in this embodiment). The dynamic dampers (50) are provided on the inner periphery of the yoke (34). The dynamic dampers (50) are arranged in a small gap (G) between the inner peripheral surface of the yoke (34) and the outer peripheral surface of the shaft (28). The dynamic dampers (50) are arranged opposite to the rotor (40) in the radial direction. The configuration of each dynamic damper (50) is the same as that of the first embodiment.

When the yoke (34) of the stator core (32) vibrates at the characteristic frequency, the dynamic damper (50) of this embodiment, similarly to the first embodiment, also vibrates with a phase different from a phase of the vibration of the yoke (34). Accordingly, the vibration of the stator core (32) is reduced. In this way, when the stator core (32) vibrates, the weight (51) vibrates accordingly, thereby reducing the vibration of the stator core (32) in the radial direction caused by the electromagnetic force.

The dynamic dampers (50) of this embodiment are integrated with the stator core (32). Thus, it is possible to provide the dynamic dampers (50) without providing extra members to the stator (31). In addition, it is unnecessary to conduct the process for attaching the dynamic dampers (50) separately from the process for producing the stator core (32), and thus it is possible to reduce an increase in the attachment process. Thus, it is possible to reduce the vibration of the stator core (32) while reducing an increase in the production cost of the stator (31).

Further, according to the above structure, it is unnecessary to conduct the process for attaching the dynamic dampers (50) to the stator core (32), and thus it is possible to eliminate the variation in accuracy of attaching the dynamic dampers (50). Thus, it is possible to reduce the variation in performance of the dynamic dampers (50) depending on the stator (31). Note that this embodiment can be modified like the first to eighth variations of the first embodiment.

<<Other Embodiments>>

The above embodiments may be modified as follows.

The electric motor (30) of each embodiment may be applied to a device other than the compressor (10). For example, the electric motor (30) of each embodiment may be applied to a blower. The blower includes the electric motor (30) and a fan driven by the electric motor (30). The fan is not limited to a particular fan, and may be, for example, a sirocco fan, a propeller fan, or the like.

The structure of each embodiment may be employed by another electromagnetic device as a magnetic circuit. Specifically, the other electromagnetic device includes a magnetic bearing that generates a levitation force on the rotor when the coil is energized, and a reactor that smooths the current pulse when the coil is energized. Accordingly, similarly to the above embodiments, it is possible to reduce the vibration of the core (32) while reducing an increase in the product cost of the electromagnetic device.

It will be understood that the embodiments and variations described above can be modified with various changes in form and details without departing from the spirit and scope of the claims. The elements according to embodiment, the variations thereof, and the other embodiments may be combined and replaced with each other.

The expressions of "first," "second," "third," . . . described above are used to distinguish the terms to which these expressions are given, and do not limit the number and order of the terms.

INDUSTRIAL APPLICABILITY

As described above, the present disclosure is useful for a magnetic circuit component, a blower, a compressor, and a refrigeration apparatus.

DESCRIPTION OF REFERENCE CHARACTERS

| | |
|---|---|
| 1 | Refrigeration Apparatus |
| 10 | Compressor |
| 20 | Drive Shaft (Shaft) |
| 30 | Electric Motor (Magnetic Circuit) |
| 31 | Stator (Magnetic Circuit Component) |
| 32 | Stator Core (Core) |
| 33 | Coil |
| 34 | Yoke |
| 40 | Rotor |
| 50 | Dynamic Damper |
| 51 | Weight |
| 52 | Connection |
| M | Electromagnetic Steel Sheet |
| R | Refrigerant Circuit |

**Claims**

1. A magnetic circuit component forming part of a magnetic circuit, comprising:

   a core (32) made of a soft magnetic material and including an annular yoke (34); and
   a dynamic damper (50) provided on the core (32) and configured to reduce vibration of the core (32), wherein
   the dynamic damper (50) includes a weight (51) and a connection (52) that connects the weight (51) with the yoke (34) and that is elastically deformable, and
   the dynamic damper (50) is integrated with the core (32).

2. The magnetic circuit component of claim 1, wherein
   the weight (51) extends along a circumferential direction of the yoke (34).

3. The magnetic circuit component of claim 1 or 2, wherein
   the dynamic damper (50) is provided on an outer periphery or an inside of the yoke (34).

4. The magnetic circuit component of any one of claims 1 to 3, wherein

   the core (32) includes a plurality of electromagnetic steel sheets (M) stacked on each other, and
   the plurality of electromagnetic steel sheets (M) are fastened to each other at the weight (51).

5. The magnetic circuit component of any one of claims 1 to 4, wherein

   the magnetic circuit includes a rotor (40) configured to be rotatable on an axial center of a shaft (20), and a stator (31) disposed to face the rotor (40) in a radial direction of the shaft (20),
   the stator (31) has a stator core (32) as the core (32) and a coil (33) wound around the stator core (32), and
   the dynamic damper (50) is arranged opposite to the rotor (40) in the radial direction.

6. The magnetic circuit component of any one of claims 1 to 5, wherein
   the magnetic circuit component forms part of an electric motor (30).

7. The magnetic circuit component of any one of claims 1 to 5, wherein
   the magnetic circuit component forms part of a magnetic bearing.

8. The magnetic circuit component of any one of claims 1 to 4, wherein
   the magnetic circuit component forms part of a reactor.

9. A blower comprising:

   an electric motor (30) including the magnetic circuit component of claim 6; and
   a fan configured to be driven by the electric motor (30).

10. A compressor comprising:
    the magnetic circuit component of claim 6 or 7.

11. A refrigeration apparatus comprising:

    the compressor (10) of claim 10; and
    a refrigerant circuit (R) through which a refrigerant compressed by the compressor (10) flows.

# FIG.1

# FIG.2

# FIG.3

# FIG.4

# FIG.5

FIG.6

FIG.7A

FIG.7B

FIG.8A    FIG.8B    FIG.8C

EP 4 576 498 A1

FIG.9A

FIG.9B

FIG.9C

# FIG.10

# FIG.11

# FIG.12A

# FIG.12B

# FIG.13

# FIG.14

# FIG.15

## INTERNATIONAL SEARCH REPORT

| | International application No. |
|---|---|
| | **PCT/JP2023/034816** |

### A. CLASSIFICATION OF SUBJECT MATTER

*H02K 1/18*(2006.01)i; *H02K 5/24*(2006.01)i
FI:   H02K1/18 A; H02K5/24 A

According to International Patent Classification (IPC) or to both national classification and IPC

### B. FIELDS SEARCHED

Minimum documentation searched (classification system followed by classification symbols)

H02K1/18; H02K5/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2011-55576 A (DAIKIN INDUSTRIES, LTD.) 17 March 2011 (2011-03-17) abstract, paragraphs [0033]-[0043], [0057]-[0059], fig. 6-8 | 1-8, 10-11 |
| Y | | 9 |
| X | WO 2021/065676 A1 (DAIKIN INDUSTRIES, LTD.) 08 April 2021 (2021-04-08) abstract, paragraphs [0024]-[0036], fig. 2, 3 | 1-8, 10-11 |
| Y | | 9 |
| X | JP 2011-19398 A (MITSUBISHI ELECTRIC CORP.) 27 January 2011 (2011-01-27) abstract, paragraphs [0028]-[0035], fig. 7 | 1-8, 10-11 |
| Y | | 9 |
| X | JP 5-191935 A (MATSUSHITA ELECTRIC INDUSTRIAL CO., LTD.) 30 July 1993 (1993-07-30) abstract, paragraphs [0010]-[0014], fig. 1 | 1-8 |
| Y | | 9 |
| Y | JP 2002-34221 A (TOSHIBA TEC KABUSHIKI KAISHA) 31 January 2002 (2002-01-31) abstract, paragraphs [0030], [0042], fig. 1-3, 6 | 9 |

☑ Further documents are listed in the continuation of Box C.   ☑ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |
| "T" | later document published after the international filing date or priority date and not in conflict with the application but cited to understand the principle or theory underlying the invention | |
| "X" | document of particular relevance; the claimed invention cannot be considered novel or cannot be considered to involve an inventive step when the document is taken alone | |
| "Y" | document of particular relevance; the claimed invention cannot be considered to involve an inventive step when the document is combined with one or more other such documents, such combination being obvious to a person skilled in the art | |
| "&" | document member of the same patent family | |

| Date of the actual completion of the international search | Date of mailing of the international search report |
|---|---|
| **15 November 2023** | **12 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| International application No. |
| --- |
| **PCT/JP2023/034816** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2014/0103756 A1 (SIEMENS AKTIENGESELLSCHAFT) 17 April 2014 (2014-04-17) | 1-11 |
| A | US 2011/0254390 A1 (ROLLS-ROYCE POWER ENGINEERING PLC) 20 October 2011 (2011-10-20) | 1-11 |
| A | WO 2022/091655 A1 (FUJITSU GENERAL LTD.) 05 May 2022 (2022-05-05)<br>    abstract, fig. 4-7 | 1-11 |
| A | JP 2009-118573 A (NISSAN MOTOR CO., LTD.) 28 May 2009 (2009-05-28)<br>    abstract, fig. 1-3, 7, 8, 17, 18 | 1-11 |
| A | US 2019/0214050 A1 (INTERNATIONAL BUSINESS MACHINES CORP.) 11 July 2019 (2019-07-11) | 1-11 |

Form PCT/ISA/210 (second sheet) (January 2015)

## INTERNATIONAL SEARCH REPORT
### Information on patent family members

International application No.

**PCT/JP2023/034816**

| Patent document cited in search report | | | Publication date (day/month/year) | Patent family member(s) | | | Publication date (day/month/year) |
|---|---|---|---|---|---|---|---|
| JP | 2011-55576 | A | 17 March 2011 | (Family: none) | | | |
| WO | 2021/065676 | A1 | 08 April 2021 | US | 2022/0216775 | A1 | |
| | | | | abstract, paragraphs [0022]-[0034], fig. 2, 3 | | | |
| | | | | EP | 4002648 | A1 | |
| | | | | CN | 114223110 | A1 | |
| | | | | JP | 2021-58082 | A | |
| JP | 2011-19398 | A | 27 January 2011 | (Family: none) | | | |
| JP | 5-191935 | A | 30 July 1993 | (Family: none) | | | |
| JP | 2002-34221 | A | 31 January 2002 | (Family: none) | | | |
| US | 2014/0103756 | A1 | 17 April 2014 | WO | 2012/159661 | A2 | |
| | | | | CN | 103548240 | A | |
| US | 2011/0254390 | A1 | 20 October 2011 | EP | 2378630 | A2 | |
| WO | 2022/091655 | A1 | 05 May 2022 | (Family: none) | | | |
| JP | 2009-118573 | A | 28 May 2009 | (Family: none) | | | |
| US | 2019/0214050 | A1 | 11 July 2019 | US | 2019/0311738 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009254012 A